(19) Europäisches Patentamt

European Patent Office

Office européen des brevets

(11) **EP 2 543 874 A1**

(12) **EUROPEAN PATENT APPLICATION**

(43) Date of publication:
**09.01.2013 Bulletin 2013/02**

(51) Int Cl.:
**F03D 1/06** (2006.01)     **D01F 9/22** (2006.01)
**B29C 70/88** (2006.01)

(21) Application number: **11172805.1**

(22) Date of filing: **06.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **LM Wind Power A/S**
**6000 Kolding (DK)**

(72) Inventors:
• **Zhang, Wenting**
**DK-6000 Kolding (DK)**
• **Olesen, Morten**
**DK-6640 Lunderskov (DK)**
• **Krogsdal Jacobsen , Torben**
**DK-6640 Lunderskov (DK)**

(74) Representative: **Kitchen, Steven Richard**
**LM Wind Power A/S**
**Jupitervej 6**
**6000 Kolding (DK)**

(54) **A wind turbine blade**

(57) The wind turbine blade (1) includes a structure made of a fibre reinforced polymer material including a polymer matrix and fibre reinforcement material embedded in the polymer matrix. The fibre reinforcement material includes carbon fibres that have been produced by carbonisation of a precursor to a carbonisation degree of 60.% to 80%.

Fig. 2

EP 2 543 874 A1

## Description

The present invention relates to a wind turbine blade including a structure made of a fibre reinforced polymer material including a polymer matrix and fibre reinforcement material embedded in the polymer matrix, wherein the fibre reinforcement material includes carbon fibres.

The damages to the wind turbine blades caused by strokes of lightning can be rather comprehensive. Extremely strong currents of the magnitude 10 to 200 kA are involved within a very short period. The power involved is low, but the effect is very strong and can cause burstings because the air confined in the blade expands explosively. It is known to insert strong interlaced cables in the blade so as to divert the lightning. Then a particular receptor is provided at the tip of the blade, said receptor serving to capture the lightning as well as to prevent this location from being too strongly heated. Furthermore it is known to reinforce each blade by means of a carbon fibre coating. A copper web can optionally be applied onto the carbon fibre coating so as to protect said coating.

WO 00/14405 discloses a wind turbine blade with a lightning conductor, where said lightning conductor is formed by one or more oblong strips of carbon fibre-reinforced plastics preferably forming part of the wind turbine blade. In this manner the oblong strips of carbon fibre-reinforced plastics both reinforce the blade and divert the lightning. However, in order to prevent carbon fibre-reinforced plastics from being too strongly heated in the case of lightning, it may be necessary to provide a carbon stick in the interior of each blade, and to connect the oblong strips to said inner carbon stick, Furthermore, a conventional lightning conductor cable may be provided on the inner carbon conductor or on an inner reinforcing member.

EP 1 664 528 B1 describes a method of lightning-proofing a wind turbine blade on a wind-energy plant The blade comprises a blade, shell configured essentially as a fibre-reinforced laminate, which laminate comprises electrically conductive fibres, wherein the blade comprises at least one lightning arrester configured for conducting lightning current, including preferably to ground. The method comprises that the electrically conductive fibres are connected to each other, and that at least one metallic receptor is arranged for capturing lightning current at or in proximity of the external face of the blade; and that the receptor and the fibres are connected to the lightning arrester for equalising the difference in potential between the lightning arrester and the electrically conductive fibres. When the electrically conductive fibres are connected to each other, the fibres will cooperate on the conduction of a possible lightning current to prevent the current from running in individual fibres. Simultaneously the metallic receptor will serve as the primary lightning capturing device and reduce the risk of lightning striking the laminate. The receptor being connected to the lightning arrester, the current will predominately be conducted to ground, while the risk of transfer to the laminate is minimised in that a possible difference in potential between fibres and lightning arrester has been equalised.

WO 03/078833 discloses a wind turbine blade of fibre-reinforced polymer. The blade is divided into an inner end portion including the blade root and made substantially from fibre glass-reinforced polymer, and an outer end portion including the blade tip and made substantial from carbon fibre-reinforced polymer, The weight is thus reduced in the outermost part, whereby the dead load moment is minimised, However, for lightning reasons the outermost portion of the blade tip may be made entirely out of fibre glass so as to ensure that strokes of lightning hit a purpose-built lightning receptor and not the electrically conducting carbon fibre material.

WO 03/078832 discloses a wind turbine blade and a transitional shell blank for the manufacture of the shelf of a wind turbine blade, the blade or the transitional shell blank being made of fibre-reinforced polymer including a first type of fibres of a first stiffness and a first elongation at breakage, and a second type of fibres of a different stiffness and a different elongation at breakage. According to the invention the two types of fibres are distributed in the polymer matrix. When seen in a sectional view perpendicular to longitudinal direction of the blade or the transitional shell blank, the quantitative ratio of the two types of fibres varies continuously in the longitudinal direction of the blade or of the transition shell blank. The first fibre type may be glass fibres and the second type may be carbon fibres. However, as described above, for lightning reasons the outermost portion of the blade tip may be made entirely out of fibre glass so as to ensure that strokes of lightning hit a purpose-built lightning receptor and not the electrically conducting carbon fibre material.

It is thus seen that known wind turbine blades incorporating carbon fibres in order to improve properties such as weight and strength are generally complicated to manufacture due to the necessary precautions in order to prevent damages caused by lightning strokes.

On the other hand, with an increasing blade length to even more than 100 metres, it may be necessary to reduce the relative weight of the blades. Furthermore, stiffer blades with better fatigue performance may be required.

The object of the present invention is to provide a wind turbine blade having improved properties with regard to weight and strength and at the same time being simpler to manufacture.

In view of this object, the carbon fibres have been produced by carbonisation of a precursor to a carbonisation degree of 60% to 80%.

Thereby, generally a vastly increased resistivity of the fibre reinforced polymer material may be obtained, whereby the need for complicated lightning protection measures may be reduced, as the carbon fibres themselves, substantially, do not conduct the current and therefore will not get damaged, At the same time, a stronger blade may be obtained, as the stiffness of carbon fibres may be up to at least three times higher compared to the stiffness of glass fibres. Furthermore, a better fatigue performance may be obtained by means of carbon fibres than by means of glass fibres. Furthermore, less material may be required per blade. Lower blade mass may lead to the reduction of root bending moment, and blades may even be easier to handle in production, shipping and mounting,

In an embodiment, the carbon fibres have been produced by carbonisation of a precursor to a carbonisation degree of less than 78%, preferably less than 76%, more preferred less than 74%, even more preferred less than 72%, even more preferred less than 70%, even more preferred less than 68%, even more preferred less than 66%, and most preferred less than 64%.

In an embodiment, the wind turbine blade includes a longitudinally extending load carrying structure including at least a part of said carbon fibres and preferably all of said carbon fibres.

In an embodiment, the longitudinally extending load carrying structure is a main laminate forming part of a shelf structure.

In an embodiment, the longitudinally extending load carrying structure is an inner beam or spar box connecting outer shell structures.

In an embodiment, the precursor is polyacrylonitrile.

In an embodiment, the fibre reinforcement material is constituted by carbon fibres.

In an embodiment, any rectangular sample corresponding in composition and thickness to a part of the shell structure has a sheet resistance of more than $10^9$ ohms-per-square and preferably more than $10^{10}$ ohms-per-square.

In an embodiment, any rectangular sample corresponding in composition and thickness to a part of the longitudinally extending load carrying structure has a sheet resistance of more than $10^9$ ohms-per-square and preferably more than $10^{10}$ ohms-per-square.

The invention will now be explained in more detail below by means of examples of embodiments with reference to the very schematic drawing, in which

Fig. 1 is a top view of a wind turbine blade;

Fig. 2 is a cross-section along the line II~II of Fig.1; and

Fig. 3 is a rectangular sample corresponding in composition and thickness to a part of the shell structure of the wind turbine blade in Figs. 1 and 2.

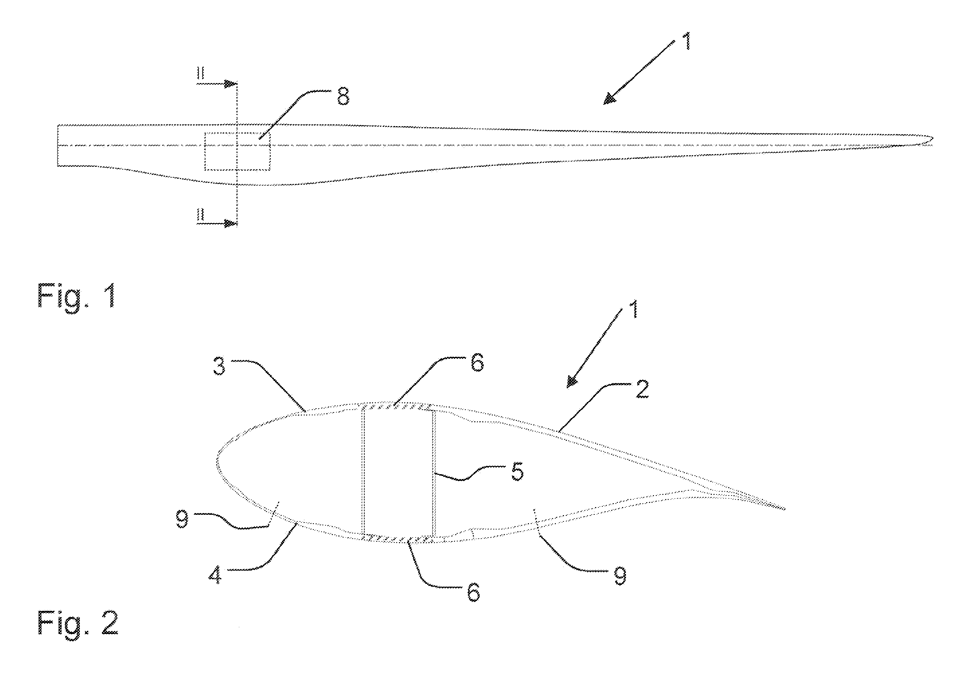

Fig. 1 shows a wind turbine blade 1 according to the invention. The wind turbine blade 1 includes a shell structure 2 made of a fibre reinforced polymer material including a polymer matrix and fibre reinforcement material embedded in the polymer matrix. As it is seen in the figure, the shell structure 2 is composed of two oblong shelf parts, an upper shell part 3 and a lower shelf part 4. The shelf parts 3, 4. are bonded together at their edges. Furthermore, the shell parts are connected internally by means of longitudinally extending reinforcement elements 5, such as beams or webs, which are aligned within the shell parts of the wind turbine blade 1 and bonded to the shell parts 3, 4.

In the shown embodiment, these reinforcement elements 5 do not carry a substantial part of the load on the blade; they rather serve to connect the shell parts of the wind turbine blade 1.

The first and second oblong shell parts 3, 4 comprise a fibre-reinforced polymer material produced by means of an infusion process, such as vacuum infusion or VARTM (Vacuum Assisted Resin Transfer Moulding). During the manufacturing process, liquid polymer, also called resin, is filled into a mould cavity, in which fibre material priorly has been inserted, and where a vacuum is generated in the mould cavity hereby drawing in the polymer. The polymer can be thermoset plastic or thermoplastics. Typically, uniformly distributed fibres are layered in a first rigid mould part, the fibres being rovings, lye, bundles of fibre bands, bands of rovings or mats, which are either felt mats made of individual fibres or woven mats made of fibre rovings. A second mould part, which is often made of a resilient vacuum bag, is subsequently placed on top of the fibre material and sealed against the first mould part in order to generate a mould cavity. By generating a vacuum, typically 80 to 95% of the total vacuum, in the mould cavity between the first mould part and the vacuum bag, the liquid polymer can be drawn in and fill the mould cavity with the fibre material contained herein, So-called distribution layers or distribution tubes, also called inlet channels, are used between the vacuum bag and the fibre material in order to obtain as sound and efficient a distribution of polymer as possible. In most cases the polymer applied is polyester or epoxy, and the fibre reinforcement is according to the present invention based at least partially on carbon fibres, but may also include glass fibres.

According to the present invention, the carbon fibres have been produced by carbonisation of a precursor to a carbonisation degree of 60% to 80%,

The carbon fibres may have been produced by carbonisation of a precursor to a carbonisation degree of less than 78%, preferably less than 76%, more preferred less than 74%, even more preferred less than 72%, even more preferred less than 70%, even more preferred less than 68%, even more preferred less than 66%, and most preferred less than 64%,

The precursor may be polyacrylonitrile, Furthermore, the fibre reinforcement material throughout the wind turbine blade may be entirely constituted by carbon fibres.

The conventional carbon fibre production process may be as follows:

- PAN production process: polymerisation, washing, surface treatment, drying, stretching and packing
- Carbonisation process: stretching, oxidation, carbonisation, surface treatment and winding

The carbonisation process leaves a fibre composed of long, tightly interlocked chains of carbon atoms. The carbonisation temperature influences the grade of carbon fibre and modulus of elasticity which, for instance, may be from 200 to more than 600 GPa. According to the invention, the carbon fibres employed may have been produced in a carbonisation process that has been modified to reduce the carbonisation degree of the carbon fibres. For instance, the carbonisation temperature may be reduced to below 1000 °C. The stretching process may be speeded up. A coating or surface treatment may be provided on the carbon fibre surface.

Furthermore, in the embodiment shown, the wind turbine blade includes a longitudinally extending load carrying structure in the form of a main laminate 6 forming part of the shell structure. The longitudinally extending load carrying structure may include at least a part of said carbon fibres. Such a load carrying structure in the form of a main laminate or the like is typically formed as a fibre insertion which comprises a plurality of fibre reinforcement layers, e.g. between 20 and 50 layers. On each side of the load carrying structure, the blade typically comprises a sandwich structure with a core material, such as balsa wood or foamed polymer, and with an inner and outer skin made of fibre reinforced polymer.

According to another not shown embodiment, the wind turbine blade includes a longitudinally extending load carrying structure in the form of an inner beam or spar box connecting outer shell structures. Said inner beam or spar box may be a separate part bonded to the outer shelf structures and may be adapted to carry a substantial part of the load on the blade. According to this embodiment, a main laminate may not be necessary.

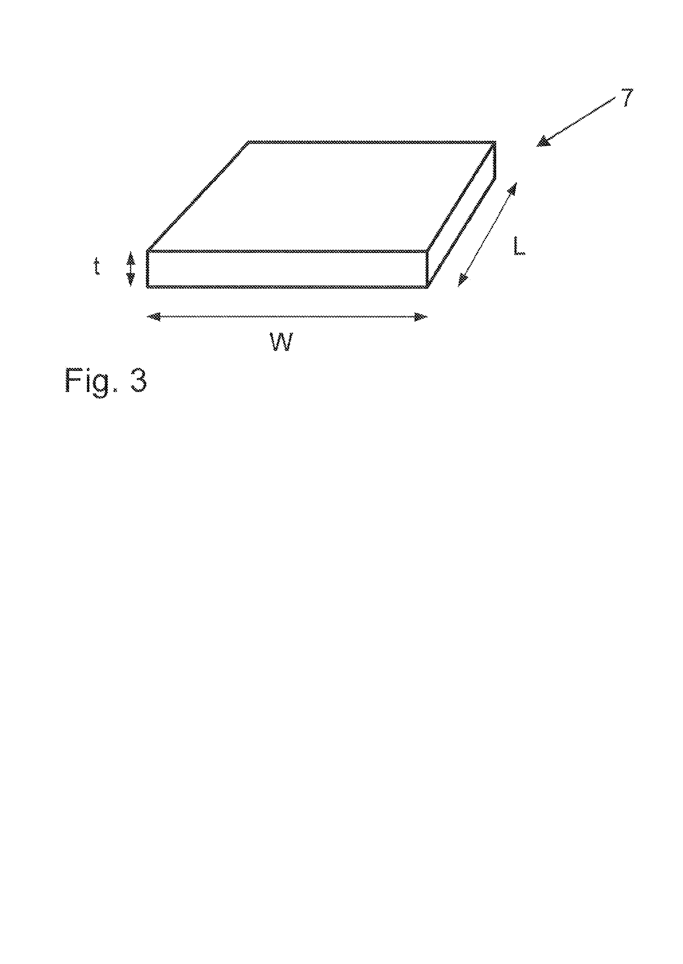

Sheet resistance is normally applicable to two-dimensional systems where a thin film is considered to be a two-dimensional entity and corresponds to resistivity as employed in three-dimensional systems. When the term sheet resistance is employed, the current flows along the plane of the sheet and not perpendicular to it. In this description, however, sheet resistance is employed to describe the resistivity of a rectangular sample 7 as shown in Fig. 3 corresponding in composition and thickness to a part of the shell structure of a wind turbine blade. The rectangular sample 7 may correspond to a rectangular piece 8 cut out of the shell structure 2 as indicated in Fig. 1, In Fig. 2, broken lines 9 indicate the longitudinal cutting lines along which the rectangular piece 8 may be cut out of the shell structure 2.

In a regular three-dimensional conductor, the resistance can be whiten as

$$R = \rho \frac{L}{A} = \rho \frac{L}{Wt}$$

where p is the resistivity, A is the cross-sectional area and L is the length. The cross-sectional area can be split into the width W and the sheet thickness t.

By grouping the resistivity with the thickness, the resistance can then be written as:

$$R = \frac{\rho}{t} \frac{L}{W} = R_s \frac{L}{W}$$

$R_s$ is then considered the sheet resistance.

As the resistance is multiplied by a dimensionless quantity to get the sheet resistance, the units of sheet resistance are ohms or commonly "ohms per square".

According to an embodiment of the present invention, any rectangular sample corresponding in composition and thickness to a part of the shell structure of the wind turbine blade has a sheet resistance of more than $10^9$ ohms-per-square and preferably more than $10^{10}$ ohms-per-square. This means that if a square-formed sample is prepared that corresponds in composition and thickness to a part of the shell structure of the wind turbine blade, this square-formed sample will have a resistance measured between two opposed edges of more than $10^9$ ohms and preferably more than $10^{10}$ ohms. Of course, according to this embodiment, the same will be true for any square-formed piece cut out of the shelf structure, through the entire thickness of the shell structure, of the wind turbine blade. If the sample is rectangular with for instance a length L of 2 metres and a width W of 1 metre, the resistance measured between the two opposed end edges (smaller edges) will, according to this embodiment, be of more than $2 \times 10^9$ ohms and preferably more than $2 \times 10^{10}$ ohms.

In an embodiment, any rectangular sample corresponding in composition and thickness to a part of the longitudinally extending load carrying structure has a sheet resistance of more than $10^9$ ohms-per-square and preferably more than $10^{10}$ ohms-per-square.

According to the invention, by the incorporation of carbon fibres as reinforcement, an improved wind turbine blade in terms of weight and strength may be obtained without the need for complicated and expensive precautions, such as difficult internal cabling, in order to prevent damages caused by lightning strokes.

**Claims**

1.  A wind turbine blade (1) including a structure made of a fibre reinforced polymer material including a polymer matrix and fibre reinforcement material embedded in the polymer matrix, wherein the fibre reinforcement material includes carbon fibres, **characterized in that** the carbon fibres have been produced by carbonisation of a precursor to a carbonisation degree of 60% to 80%,

2. A wind turbine blade according to claim 1, wherein the carbon fibres have been produced by carbonisation of a precursor to a carbonisation degree of less than 78%, preferably less than 76%, more preferred less than 74%, even more preferred less than 72%, even more preferred less than 70%, even more preferred less than 68%, even more preferred less than 66%, and most preferred less than 64%.

3. A wind turbine blade according to claim 1 or 2, wherein the wind turbine blade includes a longitudinally extending load carrying structure including at least a part of said carbon fibres and preferably all of said carbon fibres.

4. A wind turbine blade according to claim 3, wherein the longitudinally extending load carrying structure is a main laminate (6) forming part of a shell structure (2).

5. A wind turbine blade according to claim 3, wherein the longitudinally extending load carrying structure is an inner beam or spar box connecting outer shell structures.

6. A wind turbine blade according to any one of the preceding claims, wherein the precursor is polyacrylonitrile.

7. A wind turbine blade according to any one of the preceding claims, wherein the fibre reinforcement material is constituted by carbon fibres.

8. A wind turbine blade according to any one of the preceding claims, wherein any rectangular sample (7) corresponding in composition and thickness to a part of the shell structure (2) has a sheet resistance of more than $10^9$ ohms-per-square and preferably more than $10^{10}$ ohms-per-square,

9. A wind turbine blade according to any one of the claims 3 to 7, wherein any rectangular sample (7) corresponding in composition and thickness to a part of the longitudinally extending load carrying structure has a sheet resistance of more than $10^9$ ohms-per-square and preferably more than $10^{10}$ ohms-per-square.

Fig. 1

Fig. 2

EP 2 543 874 A1

Fig. 3

Europäisches
Patentamt

European
Patent Office

Office européen
des brevets

**EUROPEAN SEARCH REPORT**

Application Number

EP 11 17 2805

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2001/024722 A1 (MATSUHISA YOJI [JP] ET AL) 27 September 2001 (2001-09-27) <br> * paragraph [0055] - paragraph [0058] * <br> * paragraph [0375] - paragraph [0378] * <br> ----- | 1-9 | INV. <br> F03D1/06 <br> D01F9/22 <br><br> ADD. <br> B29C70/88 |
| Y | US 4 816 242 A (VENNER JOZEF G [US] ET AL) 28 March 1989 (1989-03-28) <br> * abstract * <br> * column 2, line 52 - column 3, line 16 * <br> * column 4, line 3 - line 25 * <br> * tables I, II * <br> ----- | 1-9 | |
| A | EP 0 278 139 A1 (STACKPOLE FIBERS COMPANY INC [US]) 17 August 1988 (1988-08-17) <br> * the whole document * <br> ----- | 1-9 | |

|  | TECHNICAL FIELDS SEARCHED (IPC) |
|---|---|
|  | D01F <br> F03D <br> B29C <br> C01B |

The present search report has been drawn up for all claims

| Place of search | Date of completion of the search | Examiner |
|---|---|---|
| The Hague | 6 December 2011 | Lozza, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 17 2805

This annex lists the patent family members relating to the patent documents cited in  the above-mentioned European search report.
The members are as contained in the European Patent Office EDP file on
The European Patent Office is in no way liable for these particulars which are merely given for the purpose of information.

06-12-2011

| Patent document cited in search report | | Publication date | Patent family member(s) | | Publication date |
|---|---|---|---|---|---|
| US  2001024722 | A1 | 27-09-2001 | US | 2001024722 A1 | 27-09-2001 |
|  |  |  | US | 2002009588 A1 | 24-01-2002 |
| US  4816242 | A | 28-03-1989 | CA | 1283516 C | 30-04-1991 |
|  |  |  | DE | 3669551 D1 | 19-04-1990 |
|  |  |  | EP | 0218235 A2 | 15-04-1987 |
|  |  |  | IL | 80168 A | 10-03-1991 |
|  |  |  | JP | 62199819 A | 03-09-1987 |
|  |  |  | US | 4816242 A | 28-03-1989 |
| EP  0278139 | A1 | 17-08-1988 | EP | 0278139 A1 | 17-08-1988 |
|  |  |  | US | 4728395 A | 01-03-1988 |

EPO FORM P0459

For more details about this annex : see Official Journal of the European Patent Office, No. 12/82

**EP 2 543 874 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0014405 A
- EP 1664528 B1
- WO 03078833 A
- WO 03078832 A